# EUROPEAN PATENT SPECIFICATION

(11) **EP 3 751 217 B1**
(45) Date of publication and mention of the grant of the patent: **24.01.2024**
(21) Application number: 18904849.9
(22) Date of filing: 12.10.2018
(51) Int. Cl.: F25B 13/00, F24F 1/0059, F24F 11/65, F24F 11/67, F24F 1/0063, F24F 13/22, F25B 49/02

(54) **AIR CONDITIONER**
KLIMAANLAGE
CLIMATISEUR

(30) Priority: 08.02.2018 JP 2018021213
(43) Date of publication of application: 16.12.2020
(73) Proprietor: Fujitsu General Limited, Kanagawa 213-8502 (JP)
(72) Inventor: HONJO, Hideki, Kawasaki-shi, Kanagawa 213-8502 (JP)
(74) Representative: Daub, Thomas
(86) International application number: PCT/JP2018/038110
(87) International publication number: WO 2019/155685

(56) References cited:
- WO-A1-2016/056076
- WO-A1-2016/056076
- CN-A- 1 566 811
- JP-A- 2007 205 656
- JP-A- 2007 205 656
- JP-A- 2008 121 997
- JP-A- 2008 121 997
- JP-A- 2016 038 152

## Description

### TECHNICAL FIELD

The present invention relates to an air conditioner configured to dry the inside of an indoor unit. Specifically, the present invention relates to an air conditioner configured to dry the inside of an indoor unit by reheat dehumidifying operation.

### BACKGROUND ART

When an air conditioner performs cooling operation, condensed water is generated in an indoor heat exchanger functioning as an evaporator. The condensed water is a cause for growth of molds and bacteria in the indoor heat exchanger, equipment therearound, and an indoor unit housing. Due to growth of the molds and the bacteria, conditioned air blown from an indoor unit has unpleasant smell. For this reason, an air conditioner configured to dry, after cooling operation, the inside of an indoor unit including an indoor heat exchanger has been proposed (see, e.g., Patent Literature 1 or Patent Literature 2).

The air conditioner described in Patent Literature 1 includes, in the indoor unit, the indoor heat exchanger having a front indoor heat exchange portion and a back indoor heat exchange portion with a smaller volume that that of the front indoor heat exchange portion, and an indoor throttle valve connected to the front indoor heat exchange portion and the back indoor heat exchange portion. In this air conditioner, reheat dehumidifying operation (specifically described as cycle dry operation in Patent Literature 1) is allowed with a small degree of opening of the indoor throttle valve. In the reheat dehumidifying operation, the front indoor heat exchange portion functions as a condenser. On the other hand, the back indoor heat exchange portion functions as an evaporator. By air blowing operation after the reheat dehumidifying operation performed for predetermined time after the cooling operation, the inside of the indoor unit including the front indoor heat exchange portion and the back indoor heat exchange portion is dried.

When the inside of the indoor unit is dried, the reheat dehumidifying operation is first performed. Thus, the front indoor heat exchange portion functions as the condenser. In this manner, condensed water generated in the front indoor heat exchange portion in the cooling operation is evaporated. The condensed water having turned into water vapor is, together with air, blown into a room from the indoor unit. The water vapor blown into the room is, together with indoor air, sucked into the indoor unit again, and turns into water droplets in the back indoor heat exchange portion functioning as the evaporator. The condensed water having turned into the water droplets in the back indoor heat exchange portion flows downwardly along the back indoor heat exchange portion. Note that not all of the condensed water flows out of the back indoor heat exchange portion. Part of the condensed water remains in the back indoor heat exchange portion. Thus, by the air blowing operation after the reheat dehumidifying operation, the condensed water remaining in the back indoor heat exchange portion is evaporated. Patent literature 2 further describes to perform a reheat dehumidifying operation in which a first heat exchange portion functions as a condenser and a second heat exchange portion functions as an evaporator.

### CITATION LIST

### PATENT LITERATURE

PATENT LITERATURE 1: JP-A-2003-14334
PATENT LITERATURE 2: JP-A-2008-121997

### SUMMARY OF INVENTION

### PROBLEMS TO BE SOLVED BY INVENTION

However, in the air conditioner described in Patent Literature 1, the condensed water remaining in the back indoor heat exchange portion is evaporated by the above-described air blowing operation. Thus, the condensed water having turned into water vapor is, together with air, blown into the room from the indoor unit again. For this reason, there is a probability that an increased humidity in the room provides a feeling of discomfort to a user.

The present invention is intended to solve the above-described problems. An object of the present invention is to provide an air conditioner configured to suppress an increase in a humidity in a room and dry the inside of an indoor unit.

### SOLUTION TO PROBLEMS

For solving the above-described problems, the air conditioner of the present invention includes an outdoor unit and an indoor unit having an indoor heat exchanger and a decompression device. The indoor heat exchanger has a first heat exchange portion and a second heat exchange portion. The decompression device is connected to the first heat exchange portion and the second heat exchange portion. This air conditioner performs cooling operation or dehumidifying operation in which the first heat exchange portion and the second heat exchange portion function as evaporators and reheat dehumidifying operation in which the first heat exchange portion functions as a condenser and the second heat exchange portion functions as the evaporator. Moreover, water repelling treatment is performed for the second heat exchange portion and hydrophilic treatment is performed for the first heat exchange portion.

### EFFECTS OF INVENTION

According to the air conditioner of the present invention configured as described above, even during the reheat dehumidifying operation which is for drying the inside of the indoor unit and in which the second heat exchange portion functions as the evaporator, no condensed water generated in the second heat exchange portion for which the water repelling treatment has been performed remains in the second heat exchange portion. Thus, the inside of the indoor unit is dried while an increase in a humidity in a room is suppressed.

### BRIEF DESCRIPTION OF DRAWINGS

Figs. 1(A) and 1(B) are views for describing an air conditioner in an embodiment of the present invention, Fig. 1(A) being an external perspective view of an indoor unit and an outdoor unit and Fig. 1(B) being an X-X sectional view of Fig. 1(A).
Figs. 2(A) and 2(B) are views for describing the air conditioner in the embodiment of the present invention, Fig. 2(A) being a refrigerant circuit diagram and Fig. 2(B) being a block diagram of an outdoor unit controller and an indoor unit controller.
Fig. 3 is a flowchart showing the flow of processing regarding internal drying operation performed after stop of cooling operation.

### DESCRIPTION OF EMBODIMENTS

Hereinafter, an embodiment of the present invention will be described in detail based on the attached drawings. An air conditioner having an outdoor unit and an indoor unit connected to each other through two refrigerant pipes will be described as an example of the present embodiment.

Note that the present invention is not limited to the following embodiment. Various modifications can be made to the following embodiment within the scope of the claims.

### Embodiment

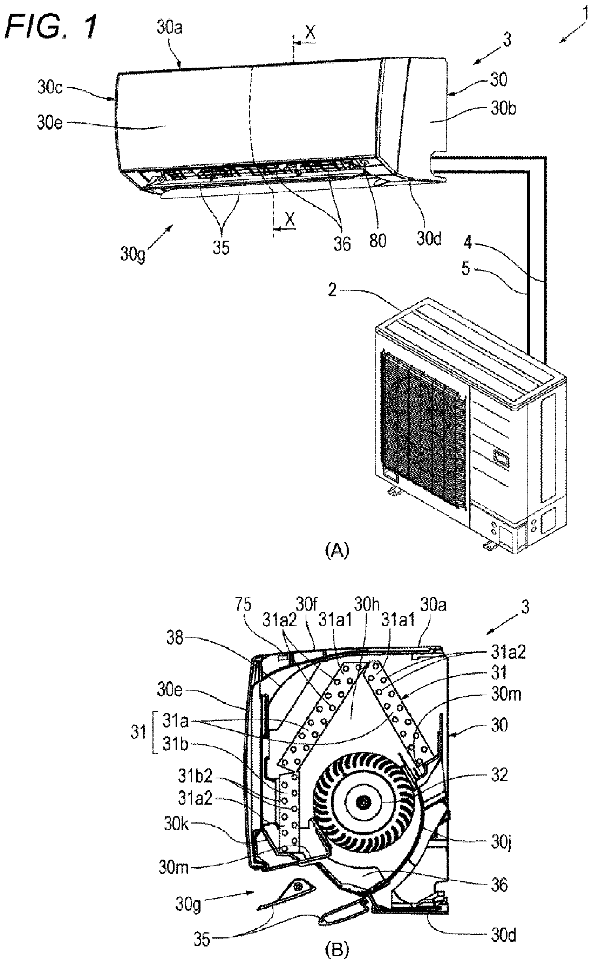

As illustrated in Fig. 1(A), an air conditioner 1 in the present embodiment has an outdoor unit 2 placed outside and an indoor unit 3 placed inside a room and connected to the outdoor unit 2 through a liquid pipe 4 and a gas pipe 5.

### <Indoor Unit Shape and Device Disposition>

The indoor unit 3 has a horizontally-elongated substantially-rectangular parallelepiped indoor unit housing 30. The indoor unit housing 30 is formed of a top panel 30a, a right side panel 30b, a left side panel 30c, a bottom panel 30d, and a front panel 30e. All of these panels are formed using a resin material.

The top panel 30a is formed in a substantially quadrangular shape. The top panel 30a forms a top surface of the indoor unit housing 30. As illustrated in Fig. 1(B), a suction opening 30f for taking indoor air into the indoor unit 3 is provided at the top panel 30a. Although not shown in the figure, the suction opening 30f is formed in a grid shape.

The right side panel 30b and the left side panel 30c form right and left side surfaces of the indoor unit housing 30. The right side panel 30b and the left side panel 30c are formed as curved surfaces having predetermined curvatures, and have bilaterally symmetrical shapes.

The bottom panel 30d is formed in a substantially quadrangular shape, and forms a bottom surface of the indoor unit housing 30. As illustrated in Fig. 1(B), a base 30j provided for attaching the indoor unit 3 to a wall surface and made of a resin material is fixed to the bottom panel 30d.

The front panel 30e is formed in a substantially quadrangular shape, and is disposed to cover a front surface of the indoor unit housing 30. The front panel 30e forms a design surface of the indoor unit 3.

As described above, the suction opening 30f is provided at the top panel 30a. Moreover, a blow opening 30g for blowing indoor air, which has exchanged heat with refrigerant in a later-described indoor heat exchanger 31, into the room is provided below the front panel 30e. Moreover, a ventilation path 30h is provided as a space connecting the suction opening 30f and the blow opening 30g in the housing 30.

An indoor fan 32 is a crossflow fan made of a resin material. The indoor fan 32 is fixed to the base 30j, and is disposed in the ventilation path 30h. By rotation of the indoor fan 32, indoor air sucked into the ventilation path 30h through the suction opening 30f is blown from the ventilation path 30h through the blow opening 30g.

The indoor heat exchanger 31 is disposed above the indoor fan 32 on a front panel 30e side. The indoor heat exchanger 31 has a first heat exchange portion 31a formed in an inverted V-shape and a second heat exchange portion 31b formed in a plate shape. The first heat exchange portion 31a is a fin-and-tube heat exchanger. The first heat exchange portion 31a is formed of heat transfer pipes 31a2 as multiple copper pipes inserted into fins 31a1 as multiple pieces of an aluminum material. As in the first heat exchange portion 31a, the second heat exchange portion 31b is also a fin-and-tube heat exchanger. The second heat exchange portion 31b is also formed of heat transfer pipes 31b2 as multiple copper pipes inserted into fins 31b1 as multiple pieces of an aluminum material.

As illustrated in Fig. 1(B), the first heat exchange portion 31a is disposed above (a top panel 30a side) the indoor fan 32 in the ventilation path 30h. Hydrophilic treatment is performed for surfaces of the fins 31a1 of the first heat exchange portion 31a. The hydrophilic treatment is the processing of increasing water wettability of the surfaces of the fins 31a1. For providing hydrophilicity to the surfaces of the fins 31a1, e.g., a hydrophilic treatment agent containing water and a poorly water-soluble cerium compound dispersed in the water is applied to and dried on the surfaces of the fins 31a1.

The second heat exchange portion 31b is disposed in the front (the front panel 30e side) of the indoor fan 32 in the ventilation path 30h. The second heat exchange portion 31b is disposed in parallel with the vertical direction, i.e., is disposed such that a thickness direction of the second heat exchange portion 31b is along a direction from the indoor fan 33 to the front panel 30e. Water repelling treatment is performed for surfaces of the fins 31b1 of the second heat exchange portion 31b. The water repelling treatment is the processing of causing the surfaces of the fins 31b1 to repel water. For providing water repelling properties to the fins 31b1, a water repelling treatment agent containing a mixture of silicone resin and polyalkyl hydrogen siloxane is applied to and dried on the surfaces of the fins 31b1. Note that the volume of the first heat exchange portion 31a is greater than that of the second heat exchange portion 31b.

The blow opening 30g is formed of a lower portion of the base 30j and a lower surface of a casing 30k attached to the front panel 30e and made of a resin material. Note that upper surfaces of the base 30j and the casing 30k form a drain pan 30m configured to receive dew condensation water generated in the indoor heat exchanger 31.

Two upper-lower wind deflectors 35 configured to deflect, in an upper-lower direction, air blown from the blow opening 30g are provided at the blow opening 30g. Each of two upper-lower wind deflectors 35 is made of a resin material. Each upper-lower wind deflector 35 has such a shape that the upper-lower wind deflector 35 can turn to close the blow opening 30g when operation of the indoor unit 3 is stopped. Each upper-lower wind deflector 35 is fixed to a not-shown rotary shaft. By turning of each upper-lower wind deflector 35 in the upper-lower direction, air blown from the blow opening 30g is deflected in the upper-lower direction.

On an upstream side (the inside of the indoor unit housing 30) of the blow opening 30g as viewed from the upper-lower wind deflectors 35, multiple right-left wind deflectors 36 configured to deflect, in a right-left direction, air blown from the blow opening 30g are provided. Each right-left wind deflector 36 is made of a resin material, and is fixed to a not-shown rotary shaft. By turning of each right-left wind deflector 36 in the right-left direction, air blown from the blow opening 30g is deflected in the right-left direction.

A filter 38 for removing dust contained in air taken into the indoor unit 3 is disposed above (between the indoor heat exchanger 31 and the suction opening 30f) the indoor heat exchanger 31 in the front (between the indoor heat exchanger 31 and the front panel 30e) of the indoor heat exchanger 31 in the ventilation path 30h. The filter 38 is, for example, formed of fibers woven in a mesh shape and made of a resin material. When indoor air taken into the housing 30 of the indoor unit 3 through the suction opening 30f passes through the filter 38, dust which is contained in such indoor air and which is larger than a mesh of the filter 38 is trapped by the filter 38.

### <Air Conditioner Configuration and Refrigerant Circuit>

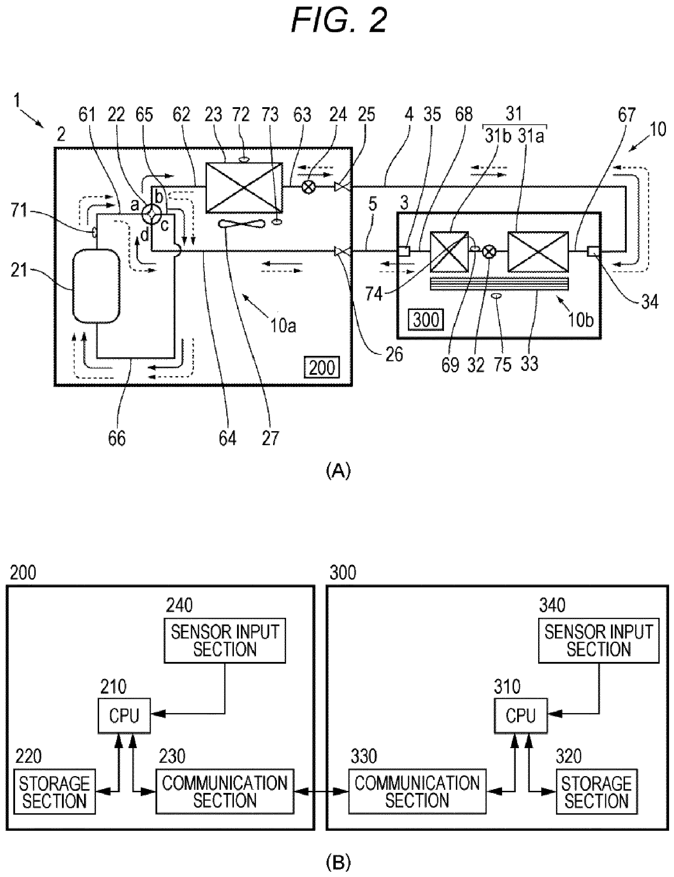

Next, each device forming the outdoor unit 2 and the indoor unit 3 and a refrigerant circuit of the air conditioner 1 including the outdoor unit 2 and the indoor unit 3 connected to each other through the refrigerant pipes will be described in detail with reference to Fig. 2. As described above, the outdoor unit 2 and the indoor unit 3 are connected to each other through the liquid pipe 4 and the gas pipe 5 as the refrigerant pipes. Specifically, a closing valve 25 (e.g., a two-way valve) of the outdoor unit 2 and a liquid pipe connection portion 34 of the indoor unit 3 are connected to each other through the liquid pipe 4. Moreover, a closing valve 26 (e.g., a threeway valve) of the outdoor unit 2 and a gas pipe connection portion 35 of the indoor unit 3 are connected to each other through the gas pipe 5. The above-described configuration forms the refrigerant circuit 10 of the air conditioner 1.

### <Outdoor Unit Configuration>

The outdoor unit 2 includes, inside a rectangular parallelepiped housing, a compressor 21, a four-way valve 22, an outdoor heat exchanger 23, an outdoor expansion valve 24, the closing valve 25 and the closing valve 26 as described above, an outdoor fan 27, and an outdoor unit controller 200. Moreover, these devices excluding the outdoor fan 27 and the outdoor unit controller 200 are connected to each other through each refrigerant pipe described below in detail, thereby forming an outdoor unit refrigerant circuit 10a forming part of the refrigerant circuit 10.

The number of rotations of the compressor 21 is controlled by a not-shown inverter. With this configuration, the compressor 21 as a variable capacity compressor can change an operation capacity. A refrigerant discharge side of the compressor 21 is connected to a port a of the four-way valve 22 through a discharge pipe 61. Moreover, a refrigerant suction side of the compressor 21 is connected to a port c of the four-way valve 22 through a suction pipe 66.

The four-way valve 22 is a valve for switching a refrigerant flow direction. The four-way valve 22 includes four ports a, b, c, d. The port a is, as described above, connected to the refrigerant discharge side of the compressor 21 through the discharge pipe 61. The port b is connected to one of refrigerant outlet and inlet of the outdoor heat exchanger 23 through a refrigerant pipe 62. As described above, the port c is connected to the refrigerant suction side of the compressor 21 through the suction pipe 66. Moreover, the port d is connected to the closing valve 26 through an outdoor unit gas pipe 64.

The outdoor heat exchanger 23 is a fin-and-tube heat exchanger including multiple copper pipes inserted into fins as multiple pieces of an aluminum material. The outdoor heat exchanger 23 exchanges heat between refrigerant and ambient air taken into the outdoor unit 2 by rotation of the outdoor fan 27 as described later. As described above, one of the refrigerant outlet and inlet of the outdoor heat exchanger 23 is connected to the port b of the four-way valve 22 through the refrigerant pipe 62. The other one of the refrigerant outlet and inlet is connected to the closing valve 25 through an outdoor unit liquid pipe 63.

The outdoor expansion valve 24 is, for example, an electronic expansion valve. The degree of opening of the outdoor expansion valve 24 is adjusted according to a cooling capacity or a heating capacity required for the indoor unit 3. In this manner, the amount of refrigerant flowing in the indoor unit 3 is adjusted.

The outdoor fan 27 is a propeller fan made of a resin material. The outdoor fan 27 is disposed in the vicinity of the outdoor heat exchanger 23. The outdoor fan 27 is rotated by a not-shown fan motor. In this manner, ambient air is taken into the outdoor unit 2 through a suction opening provided at the housing of the outdoor unit 2. Then, the ambient air having exchanged heat with refrigerant in the outdoor heat exchanger 23 is released to the outside of the outdoor unit 2 through a blow opening provided at the housing of the outdoor unit 2.

In addition to each device described above, three sensors described below are provided at the outdoor unit 2. As illustrated in Fig. 2(A), a discharge temperature sensor 71 configured to detect the temperature of refrigerant discharged from the compressor 21 is provided at the discharge pipe 61. An outdoor heat exchanger temperature sensor 72 configured to detect the temperature of the outdoor heat exchanger 23 is provided at a substantially intermediate portion of a not-shown refrigerant path of the outdoor heat exchanger 23. Moreover, in the vicinity of the suction opening provided at the housing of the outdoor unit 2, an ambient air temperature sensor 73 configured to detect the temperature of ambient air flowing into the outdoor unit 2, i.e., an ambient air temperature, is provided.

The outdoor unit controller 200 is mounted on a control board stored in a not-shown electrical equipment box provided inside the housing of the outdoor unit 2. As illustrated in Fig. 2(B), the outdoor unit controller 200 includes a CPU 210, a storage section 220, a communication section 230, and a sensor input section 240.

The storage section 220 includes, for example, a flash memory. The storage section 220 stores, for example, a control program of the outdoor unit 2, detection values corresponding to detection signals from various sensors, and control states of the compressor 21 and the outdoor fan 27. The communication section 230 is an interface configured to perform communication with the indoor unit 3. The sensor input section 240 takes detection results of various sensors of the outdoor unit 2 to output these detection results to the CPU 210.

The CPU 210 takes the above-described detection result of each sensor of the outdoor unit 2 via the sensor input section 240. Moreover, the CPU 210 takes a control signal transmitted from the indoor unit 3 via the communication section 230. Based on the taken detection results and the taken control signal, the CPU 210 controls drive of the compressor 21 and the outdoor fan 27. Moreover, the CPU 210 controls switching of the four-way valve 22 based on the taken detection results and the taken control signal. Further, the CPU 210 adjusts the degree of opening of the outdoor expansion valve 24 based on the taken detection results and the taken control signal.

### <Indoor Unit Configuration>

In addition to the indoor heat exchanger 31, the indoor fan 33, the upper-lower wind deflectors 35, the right-left wind deflectors 36, and the filter 38 as described above, the indoor unit 3 includes an indoor expansion valve 32 as a decompression device of the present invention, the liquid pipe connection portion 34 connected to the liquid pipe 4, the gas pipe connection portion 35 connected to the gas pipe 5, and an indoor unit controller 300. Moreover, these devices excluding the indoor fan 32, the upper-lower wind deflectors 35, the right-left wind deflectors 36, the filter 38, and the indoor unit controller 300 are connected to each other through each refrigerant pipe described below in detail. In this manner, an indoor unit refrigerant circuit 10b forming part of the refrigerant circuit 10 is formed.

The indoor heat exchanger 31 exchanges heat between refrigerant and indoor air taken into the indoor unit 3 through the suction opening 30f of the indoor unit 3 by rotation of the indoor fan 32. As described above, the indoor heat exchanger 31 includes the first heat exchange portion 31a and the second heat exchange portion 31b. The hydrophilic treatment is performed for the surfaces of the fins 31a1. The water repelling treatment is performed for the surfaces of the fins 31b1. One of refrigerant outlet and inlet of the first heat exchange portion 31a is connected to the liquid pipe connection portion 34 through an indoor unit liquid pipe 67. One of refrigerant outlet and inlet of the second heat exchange portion 31b is connected to the gas pipe connection portion 35 through an indoor unit gas pipe 68. Moreover, the other one of the refrigerant outlet and inlet of the first heat exchange portion 31a and the other one of the refrigerant outlet and inlet of the second heat exchange portion 31b are connected to each other through a refrigerant pipe 69.

The indoor expansion valve 32 is, for example, an electronic expansion valve. The indoor expansion valve 32 is provided at the refrigerant pipe 69. In a case where the air conditioner 1 performs heating operation, cooling operation, and dehumidifying operation, the degree of opening of the indoor expansion valve 32 is changed to that in a fully-open state. Moreover, in a case where the air conditioner 1 performs reheat dehumidifying operation, the degree of opening of the indoor expansion valve 32 is a predetermined opening degree smaller than that in the fully-open state (e.g., equal to or smaller than the half of the opening degree in the fully-open state).

In addition to each device described above, two sensors described below are provided at the indoor unit 3. An indoor heat exchanger temperature sensor 74 configured to detect the temperature of the first heat exchange portion 31a of the indoor heat exchanger 31 is provided at a substantially intermediate portion of the not-shown heat transfer pipe of the first heat exchange portion 31a of the indoor heat exchanger 31. When the air conditioner 1 performs the cooling operation or the heating operation, the temperature detected by the indoor heat exchanger temperature sensor 74 is taken as the temperature of the indoor heat exchanger 31. Then, based on the detected temperature, the cooling operation or the heating operation is controlled. Moreover, as illustrated in Fig. 1(B), an indoor temperature sensor 75 configured to detect the temperature of air sucked into the indoor unit 3 through the suction opening 30f, i.e., an indoor temperature, is provided between the suction opening 30f and the filter 38 of the indoor unit 3.

The indoor unit controller 300 is mounted on a control board stored in a not-shown electrical equipment box provided inside the housing 30 of the indoor unit 3. As illustrated in Fig. 2(B), the indoor unit controller 300 includes a CPU 310, a storage section 320, a communication section 330, and a sensor input section 340.

The storage section 320 includes, for example, a flash memory. The storage section 320 stores, for example, a control program of the indoor unit 3, detection values corresponding to detection signals from various sensors, and a control state of the indoor fan 32. The communication section 330 is an interface for performing communication with the outdoor unit controller 200 of the outdoor unit 2. The sensor input section 340 takes detection results of the indoor heat exchanger temperature sensor 74 and the indoor temperature sensor 75 of the indoor unit 3 to output these detection results to the CPU 310.

The CPU 310 takes the above-described detection result of each sensor of the indoor unit 3 via the sensor input section 340. Moreover, the CPU 310 takes, via the communication section 330, an operation information signal containing an operation mode (the cooling operation, the dehumidifying operation, the reheat dehumidifying operation, or the heating operation), a wind volume and the like. The operation information signal is transmitted from a not-shown remote controller operated by a user. Based on the taken detection results and the taken operation information signal, the CPU 310 controls drive of the indoor fan 32, the upper-lower wind deflectors 35, and the right-left wind deflectors 36.

### <Refrigerant Circuit Operation>

Next, the flow of refrigerant in the refrigerant circuit 10 in air conditioning operation of the air conditioner 1 according to the present embodiment and operation of each section will be described with reference to Fig. 2(A). The air conditioner 1 of the present embodiment allows the heating operation, the cooling operation, the dehumidifying operation, and the reheat dehumidifying operation. In the heating operation, the outdoor heat exchanger 23 functions as an evaporator. In addition, the first heat exchange portion 31a and the second heat exchange portion 31b of the indoor heat exchanger 31 function as condensers. In the cooling operation and the dehumidifying operation, the outdoor heat exchanger 23 functions as a condenser. In addition, the first heat exchange portion 31a and the second heat exchange portion 31b of the indoor heat exchanger 31 function as evaporators. In the reheat dehumidifying operation, the outdoor heat exchanger 23 and the first heat exchange portion 31a of the indoor heat exchanger 31 function as condensers. In addition, the second heat exchange portion 31b functions as an evaporator.

In description below, a case where the air conditioner 1 performs the heating operation will be first described. Next, a case where the air conditioner 1 performs the cooling operation or the dehumidifying operation will be described. Then, a case where the air conditioner 1 performs the reheat dehumidifying operation will be described. Note that in Fig. 2(A), solid arrows indicate the flow of refrigerant in the cooling operation, the dehumidifying operation, and the reheat dehumidifying operation. Dashed arrows indicate the flow of refrigerant in the heating operation.

### <Heating Operation>

In a case where the air conditioner 1 performs the heating operation, the four-way valve 22 is, as illustrated in Fig. 2(A), switched to a state indicated by a dashed line, i.e., is switched such that the port a and the port d of the four-way valve 22 are communicated with each other and the port b and the port c are communicated with each other. Accordingly, in the refrigerant circuit 10, the outdoor heat exchanger 23 functions as the evaporator. In addition, the indoor heat exchanger 31 functions as the condenser. In this manner, the refrigerant circuit 10 is in a heating cycle in which refrigerant circulates in a direction indicated by the dashed arrows.

When the compressor 21 is driven in the state of the refrigerant circuit 10 as described above, high-pressure refrigerant discharged from the compressor 21 flows into the four-way valve 22 after having flowed in the discharge pipe 61. Then, the refrigerant flows into the gas pipe 5 from the four-way valve 22 through the outdoor unit gas pipe 64 and the closing valve 26. The refrigerant flowing in the gas pipe 5 flows into the indoor unit 3 through the gas pipe connection portion 35.

The refrigerant having flowed into the indoor unit 3 flows into the second heat exchange portion 31b of the indoor heat exchanger 31 after having flowed in the indoor unit gas pipe 68. Then, the refrigerant is condensed by exchanging heat with indoor air taken into the ventilation path 30h of the indoor unit 3 through the suction opening 30f by rotation of the indoor fan 32. The refrigerant having flowed out to the refrigerant pipe 69 from the second heat exchange portion 31b passes through the indoor expansion valve 32 of which opening degree is that in the fully-open state, and flows into the second heat exchange portion 31a of the indoor heat exchanger 31. Then, the refrigerant is condensed by exchanging heat with indoor air taken into the ventilation path 30h of the indoor unit 3 through the suction opening 30f by rotation of the indoor fan 32.

As described above, the first heat exchange portion 31a and the second heat exchange portion 31b of the indoor heat exchanger 31 function as the condensers. Then, the indoor air having exchanged heat with the refrigerant in each of the first heat exchange portion 31a and the second heat exchange portion 31b is blown into the room through the blow opening 30g. In this manner, the inside of the room where the indoor unit 3 is placed is heated.

The refrigerant having flowed out to the indoor unit liquid pipe 67 from the first heat exchange portion 31a flows into the liquid pipe 4 through the liquid pipe connection portion 34. Further, the refrigerant flows in the liquid pipe 4, and flows into the outdoor unit 2 through the closing valve 25. Then, the refrigerant flows in the outdoor unit liquid pipe 63, and is decompressed when passing through the outdoor expansion valve 24. The degree of opening of the outdoor expansion valve 24 is set by the indoor unit 3 according to the heating capacity required from the user.

The refrigerant having flowed into the outdoor heat exchanger 23 after having passed through the outdoor expansion valve 24 is evaporated by exchanging heat with ambient air taken into the outdoor unit 2 by rotation of the outdoor fan 27. The refrigerant having flowed out to the refrigerant pipe 62 from the outdoor heat exchanger 23 flows in the four-way valve 22 and the suction pipe 66, and is sucked into the compressor 21. In the compressor 21, the refrigerant is compressed again.

### <Cooling Operation and Dehumidifying Operation>

In a case where the air conditioner 1 performs the cooling operation or the dehumidifying operation, the four-way valve 22 is, as illustrated in Fig. 2(A), switched to a state indicated by a solid line, i.e., is switched such that the port a and the port b of the four-way valve 22 are communicated with each other and the port c and the port d are communicated with each other. Accordingly, in the refrigerant circuit 10, the outdoor heat exchanger 23 functions as the condenser. In addition, the indoor heat exchanger 31 functions as the evaporator. In this manner, the refrigerant circuit 10 is in a cooling cycle in which refrigerant circulates in a direction indicated by the solid arrows.

When the compressor 21 is driven in the state of the refrigerant circuit 10 as described above, high-pressure refrigerant discharged from the compressor 21 flows into the four-way valve 22 after having flowed in the discharge pipe 61. Then, the refrigerant flows into the outdoor heat exchanger 23 from the four-way valve 22 after having flowed in the refrigerant pipe 62. The refrigerant having flowed into the outdoor heat exchanger 23 is condensed by exchanging heat with ambient air taken into the outdoor unit 2 by rotation of the outdoor fan 27. The refrigerant having flowed out to the outdoor unit liquid pipe 63 from the outdoor heat exchanger 23 is decompressed when passing through the outdoor expansion valve 24. The degree of opening of the outdoor expansion valve 24 is set by the indoor unit 3 according to a request from the user, specifically each of the cooling capacity required for the cooling operation and an indoor humidity required for the dehumidifying operation. Then, the refrigerant flows into the liquid pipe 4 through the closing valve 25.

Thereafter, the refrigerant flows in the liquid pipe 4, and flows into the indoor unit 3 through the liquid side connection portion 34. Further, the refrigerant flows into the first heat exchange portion 31a of the indoor heat exchanger 31 after having flowed in the indoor unit liquid pipe 67. Then, the refrigerant is evaporated by exchanging heat with indoor air taken into the ventilation path 30h of the indoor unit 3 through the suction opening 30f by rotation of the indoor fan 32. The refrigerant having flowed out to the refrigerant pipe 69 from the first heat exchange portion 31a passes through the indoor expansion valve 32 of which opening degree has been set to that in the fully-open state, and flows into the first heat exchange portion 31b of the indoor heat exchanger 31. Then, the refrigerant is evaporated by exchanging heat with indoor air taken into the ventilation path 30h of the indoor unit 3 through the suction opening 30f by rotation of the indoor fan 32.

As described above, the first heat exchange portion 31a and the second heat exchange portion 31b of the indoor heat exchanger 31 function as the evaporators. Then, the indoor air having exchanged heat with the refrigerant in each of the first heat exchange portion 31a and the second heat exchange portion 31b is blown into the room through the blow opening 30g. Accordingly, the inside of the room where the indoor unit 3 is placed is cooled or dehumidified. Note that the number of rotations of the indoor fan 33 in the dehumidifying operation is smaller than the number of rotations of the indoor fan 33 in the cooling operation such that the volume of air blown through the blow opening 30g is smaller in the dehumidifying operation than in the cooling operation.

The refrigerant having flowed out of the second heat exchange portion 31b of the indoor heat exchanger 31 flows in the indoor unit gas pipe 68, and flows into the gas pipe 5 through the gas side connection portion 35. The refrigerant having flowed into the outdoor unit 2 through the closing valve 26 after having flowed in the gas pipe 5 flows in the outdoor unit gas pipe 64, the four-way valve 22, and the suction pipe 66 in this order, and is sucked into the compressor 21 and is compressed again in the compressor 21.

### <Reheat Dehumidifying Operation>

In a case where the air conditioner 1 performs the reheat dehumidifying operation, the refrigerant circuit 10 forms the cooling cycle as in the above-described case of the cooling operation or the dehumidifying operation. Note that the degree of opening of the outdoor expansion valve 24, the degree of opening of the indoor expansion valve 32, and the number of rotations of the indoor fan 33 are each different from those in the case of the cooling operation or the dehumidifying operation. Specifically, the degree of opening of the outdoor expansion valve 24 is set to that in a fully-open state. The degree of opening of the indoor expansion valve 32 is set to a predetermined opening degree such as a smaller opening degree than the half of the opening degree in the fully-open state. Thus, the first heat exchange portion 31a of the indoor heat exchanger 31 functions as the condenser. In addition, the second heat exchange portion 31b of the indoor heat exchanger 31 functions as the evaporator. Moreover, the number of rotations of the indoor fan 33 is set to a smaller number of rotations than the number of rotations in the cooling operation or the dehumidifying operation.

Note that operation of the refrigerant circuit 10 and the flow of refrigerant in the refrigerant circuit 10 except for the degree of opening of the outdoor expansion valve 24, the degree of opening of the indoor expansion valve 32, and the number of rotations of the indoor fan 33 as described above are the same as those in the case of the cooling operation or the dehumidifying operation. Thus, detailed description thereof will be omitted. In description below, the refrigerant circuit 10 until refrigerant flows out of the second heat exchange portion 31b of the indoor heat exchanger 31 after having flowed out of the outdoor heat exchanger 23 will be described.

Refrigerant brought into a gas-liquid two-phase state by exchanging heat with ambient air in the outdoor heat exchanger 23 flows into the outdoor unit liquid pipe 63. Then, the refrigerant passes through the outdoor expansion valve 24 set to the fully-open state, and flows into the liquid pipe 4 through the closing valve 25. Further, the refrigerant flows in the liquid pipe 4, and flows into the indoor unit 3 through the liquid side connection portion 34. Thereafter, the refrigerant flows into the first heat exchange portion 31a of the indoor heat exchanger 31 after having flowed in the indoor unit liquid pipe 67. Then, the refrigerant is condensed by exchanging heat with indoor air taken into the ventilation path 30h of the indoor unit 3 through the suction opening 30f by rotation of the indoor fan 32. The refrigerant having flowed out to the refrigerant pipe 69 from the first heat exchange portion 31a is decompressed through the indoor expansion valve 32 set to the predetermined opening degree as described above. Then, the refrigerant having flowed into the first heat exchange portion 31b of the indoor heat exchanger 31 is evaporated by exchanging heat with indoor air taken into the ventilation path 30h of the indoor unit 3 through the suction opening 30f by rotation of the indoor fan 32.

As described above, the first heat exchange portion 31a of the indoor heat exchanger 31 functions as the condenser. In addition, the second heat exchange portion 31b of the indoor heat exchanger 31 functions as the evaporator. With this configuration, a decrease in the temperature of air blown into the room through the blow opening 30g is suppressed. At the same time, the humidity inside the room is decreased.

### <Internal Drying Operation after End of Cooling Operation or Dehumidifying Operation>

Next, internal drying operation of the air conditioner 1 performed after the cooling operation or the dehumidifying operation will be described with reference to Figs. 1 to 3. The internal drying operation of the present embodiment is performed in a case where there is a user's instruction. That is, in a case where the user instructs operation stop during the cooling operation or the dehumidifying operation, condensed water generated inside the indoor unit 3 is dried by the above-described reheat dehumidifying operation for predetermined time.

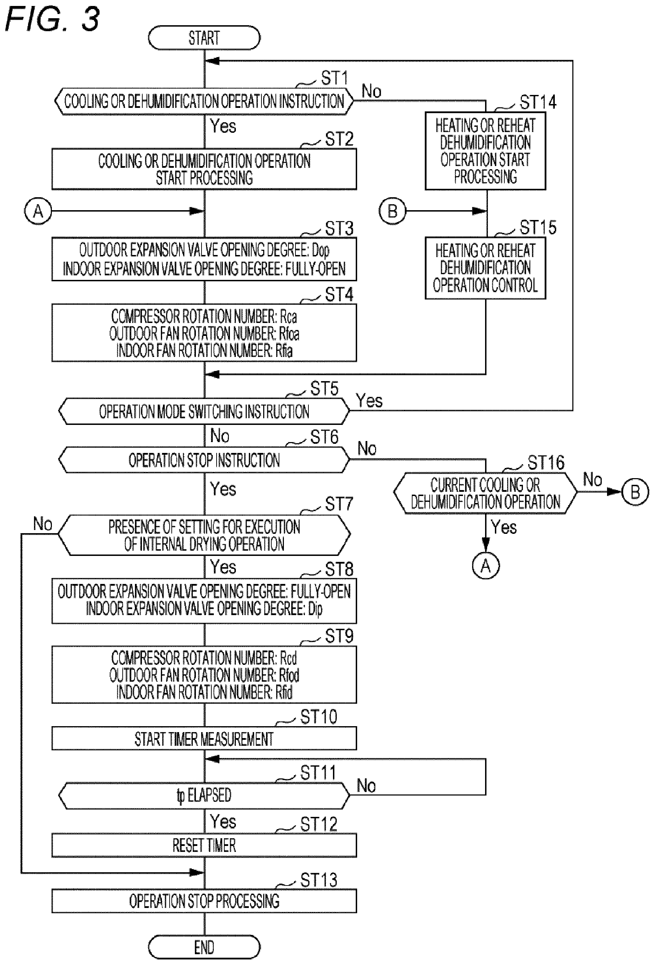

Fig. 3 is a flowchart showing processing regarding the internal drying operation when the air conditioner 1 performs the internal drying operation. In Fig. 3, ST indicates a processing step. A number following ST indicates a step number. Note that the outdoor unit controller 200 and the indoor unit controller 300 as described above form a controller of the present invention. Thus, in subsequent description of the processing regarding the internal drying operation, the processing will be described using the controller as a control entity of the air conditioner 1. Moreover, the processing will be described using the CPU 210 of the outdoor unit controller 200 or the CPU 310 of the indoor unit controller 300 as a control entity of each device of the outdoor unit 2 and the indoor unit 3, as necessary.

Further, in subsequent description, cooling/dehumidifying opening degree as the degree of opening of the outdoor expansion valve 24 in the cooling operation or the dehumidifying operation is indicated by Dop. A cooling/dehumidifying compressor rotation number as the number of rotations of the compressor 21 is indicated by Rca. A cooling/dehumidifying outdoor fan rotation number of the outdoor fan 27 is indicated by Rfoa. A cooling/dehumidifying indoor fan rotation number of the indoor fan 33 is indicated by Rfia.

Each of the cooling/dehumidifying opening degree Dop and the cooling/dehumidifying compressor rotation number Rca as described herein is set to a value according to the cooling capacity required from the user or the indoor humidity required from the user. Moreover, the cooling/dehumidifying outdoor fan rotation number Rfoa is set to a value according to the cooling/dehumidifying compressor rotation number Rca. Further, the cooling/dehumidifying indoor fan rotation number Rfia is set such that the number of rotations in the dehumidifying operation is smaller than the number of rotations in the cooling operation.

Moreover, an internal drying opening degree as the degree of opening of the indoor expansion valve 32 in the internal drying operation is indicated by Dip. An internal drying compressor rotation number as the number of rotations of the compressor 21 is indicated by Rcd. An internal drying outdoor fan rotation number as the number of rotations of the outdoor fan 27 is indicated by Rfod. An internal drying indoor fan rotation number as the number of rotations of the indoor fan 33 is indicated by Rfid.

The internal drying opening degree Dip as described herein is a predetermined opening degree such as a smaller opening degree than the half of the opening degree in the fully-open state. With this predetermined opening degree, the pressure of refrigerant can be decreased such that the second heat exchange portion 31b of the indoor heat exchanger 31 functions as the evaporator. Moreover, each of the internal drying compressor rotation number Red and the internal drying indoor fan rotation number Rfid is set to a smaller predetermined rotation number than the number of rotations in the cooling operation or the dehumidifying operation. For example, the internal drying compressor rotation number Red is set to 40 rps. Moreover, the internal drying indoor fan rotation number Rfid is set to 1100 rpm. Further, the internal drying outdoor fan rotation number Rfod is set to a value according to the internal drying compressor rotation number Rcd.

Note that each of the internal drying compressor rotation number Red and the internal drying indoor fan rotation number Rfid is a value obtained by, e.g., a trial in advance. These values are stored in the storage section 220 of the outdoor unit controller 200 or the storage section 320 of the indoor unit controller 300. It has been found that almost all condensed water inside the indoor unit 3 is evaporated if the internal drying operation is performed during subsequently-described drying operation time tp based on these values.

Further, the drying operation time as time for which the internal drying operation is continued is indicated by tp. The drying operation time tp is a value stored in the storage section 220 of the outdoor unit controller 200 or the storage section 320 of the indoor unit controller 300 in advance after, e.g., a trial has been conducted. It has been found that if the internal drying operation is continued for the drying operation time tp, almost all condensed water generated inside the indoor unit 3 due to the cooling operation or the dehumidifying operation is evaporated. Note that one example of the drying operation time tp is 85 minutes.

### <Flow of Processing of Internal Drying Operation>

First, the controller determines whether the operation instructed by the user is the cooling operation or the dehumidifying operation (ST1). When the user's operation instruction is neither the cooling operation nor the dehumidifying operation (ST1-No), the controller performs the processing of staring the heating operation or the processing of starting the reheat dehumidifying operation (ST14). The processing of staring the heating operation as described herein is the processing of forming the heating cycle by the refrigerant circuit 10 by operation of the four-way valve 22 by the CPU 210. Moreover, the processing of starting the reheat dehumidifying operation is the processing of forming the cooling cycle by the refrigerant circuit 10 by operation of the four-way valve 22 by the CPU 210. In addition, in the processing of starting the reheat dehumidifying operation, the CPU 210 sets the degree of opening of the outdoor expansion valve 24 to that in the fully-open state, and the CPU 310 further sets the degree of opening of the indoor expansion valve 32 to the above-described predetermined opening degree Dip. In this manner, the first heat exchange portion 31a is in a state in which the first heat exchange portion 31a functions as the condenser. In addition, the second heat exchange portion 31b is in a state in which the second heat exchange portion 31b functions as the evaporator.

After the end of the processing of ST14, the controller performs heating operation control or reheat dehumidifying operation control (ST15). Then, the controller proceeds the processing to ST5. In each of the heating operation control and the reheat dehumidifying operation control, the controller controls each of the compressor 21, the outdoor expansion valve 24, the outdoor fan 27, the indoor expansion valve 32, and the indoor fan 33 according to, e.g., the required heating capacity.

At ST1, when the operation instructed by the user is the cooling operation or the dehumidifying operation (ST1-Yes), the controller performs the processing of starting the cooling operation or the dehumidifying operation (ST2). The processing of starting the cooling operation or the processing of starting the dehumidifying operation as described herein is the processing of forming the cooling cycle by the refrigerant circuit 10 by operation of the four-way valve 22 by the CPU 210.

Next, the controller sets the degree of opening of the outdoor expansion valve 24 to the cooling/dehumidifying opening degree Dop. In addition, the controller sets the degree of opening of the indoor expansion valve 32 to that in the fully-open state (ST3). Specifically, the CPU 210 sets the degree of opening of the outdoor expansion valve 24 to the cooling/dehumidifying opening degree Dop. Moreover, the CPU 310 sets the degree of opening of the indoor expansion valve 32 to that in the fully-open state.

Next, the controller sets the number of rotations of the compressor 21 to the cooling/dehumidifying compressor rotation number Rca, sets the number of rotations of the outdoor fan 27 to the cooling/dehumidifying outdoor fan rotation number Rfoa, and sets the number of rotations of the indoor fan 33 to the cooling/dehumidifying indoor fan rotation number Rfia (ST4). In this manner, the controller starts the cooling operation or the dehumidifying operation. Specifically, the CPU 210 sets the number of rotations of the compressor 21 to the cooling/dehumidifying compressor rotation number Rca. In addition, the CPU 210 sets the number of rotations of the outdoor fan 27 to the cooling/dehumidifying outdoor fan rotation number Rfoa. Further, the CPU 310 sets the number of rotations of the indoor fan 33 to the cooling/dehumidifying indoor fan rotation number Rfia.

Next, the controller determines whether or not there is a user's instruction for switching the operation mode (ST5). The operation mode switching instruction as described herein is an instruction for switching the operation mode from current operation to another type of operation, such as an instruction for switching the operation mode from the cooling operation to the heating operation.

When there is the operation mode switching instruction (ST5-Yes), the controller returns the processing to ST1. When there is no operation mode switching instruction (ST5-Yes), the controller determines whether or not there is a user's instruction for stopping the operation (ST6). The operation stop instruction as described herein is an instruction provided for the air conditioner 1 to stop the operation by stop of the compressor 21.

When there is no user's operation stop instruction (ST6-No), the controller determines whether the current operation is the cooling operation or the dehumidifying operation (ST16). When the current operation is the cooling operation or the dehumidifying operation (ST16-Yes), the controller returns the processing to ST3. When the current operation is neither the cooling operation nor the dehumidifying operation (ST16-No), i.e., when the current operation is the heating operation or the reheat dehumidifying operation, the controller returns the processing to ST15.

At ST6, when there is the user's operation stop instruction (ST6-Yes), the controller determines whether or not the user has set such that the internal drying operation is performed in the case of stopping the air conditioner 1 when the cooling operation or the dehumidifying operation is performed (ST7). For example, when the cooling operation or the dehumidifying operation is performed, the air conditioner 1 is stopped by user's operation of the not-shown remote controller. It is set in advance whether or not the internal drying operation is to be performed in this case.

When it is not set that the internal drying operation is performed (ST7-No), the controller proceeds the processing to ST13. When it is set that the internal drying operation is performed (ST7-Yes), the controller sets the degree of opening of the outdoor expansion valve 24 to that in the fully-open state. In addition, the controller sets the degree of opening of the indoor expansion valve 32 to the internal drying opening degree Dip (ST8). Specifically, the CPU 210 sets the degree of opening of the outdoor expansion valve 24 to that in the fully-open state. Moreover, the CPU 310 sets the degree of opening of the indoor expansion valve 32 to the internal drying opening degree Dip.

Next, the controller sets the number of rotations of the compressor 21 to the internal drying compressor rotation number Rcd, sets the number of rotations of the outdoor fan 27 to the internal drying outdoor fan rotation number Rfod, and sets the number of rotations of the indoor fan 33 to the internal drying indoor fan rotation number Rfid (ST9). In this manner, the internal drying operation is started. Specifically, the CPU 210 sets the number of rotations of the compressor 21 to the internal drying compressor rotation number Rcd. In addition, the CPU 210 sets the number of rotations of the outdoor fan 27 to the internal drying outdoor fan rotation number Rfod. Further, the CPU 310 sets the number of rotations of the indoor fan 33 to the internal drying indoor fan rotation number Rfid. Note that each type of processing of ST8 and ST9 as described above is the processing regarding the internal drying operation.

As described above, the refrigerant circuit 10 in the state of the reheat dehumidifying operation performs the internal drying operation. Then, in the first heat exchange portion 31a functioning as the condenser, the first heat exchange portion 31a is first heated by refrigerant flowing into the first heat exchange portion 31a. Then, condensed water generated in the first heat exchange portion 31a in the cooling operation or the dehumidifying operation is evaporated. At this point, the first heat exchange portion 31a is heated. In this manner, members forming other devices than the first heat exchange portion 31a in the indoor unit 3 and the housing 30 can be dried.

As described above, the hydrophilic treatment is performed for the first heat exchange portion 31a. Thus, condensed water generated in the first heat exchange portion 31a stays on the surfaces of the fins 31a1 of the first heat exchange portion 31a without dropping onto the drain pan 30m below the first heat exchange portion 31a. Thus, the refrigerant circuit 10 in the state of the reheat dehumidifying operation performs the internal drying operation so that condensed water can be easily evaporated from the first heat exchange portion 31a.

Condensed water having turned into water vapor by heating in the first heat exchange portion 31a flows, together with air, out of the housing 30 of the indoor unit 3 through the blow opening 30g by rotation of the indoor fan 33. However, indoor air containing the condensed water having turned into the water vapor is again taken into the housing 30 of the indoor unit 3 through the suction opening 30f. Then, such water vapor is cooled by refrigerant in the second heat exchange portion 31b functioning as the evaporator, and turns into water droplets in the second heat exchange portion 31b.

As described above, the water repelling treatment is performed for the second heat exchange portion 31b. Thus, the condensed water having turned into the water droplets from the water vapor in the second heat exchange portion 31b flows immediately downwardly on the fins 31b1, and drops onto the drain pan 30m. Thus, air blowing operation for drying the second heat exchange portion 31b as in the prior art is not necessary after the internal drying operation of the indoor unit 3 by the reheat dehumidifying operation. Consequently, no condensed water having turned into the water droplets in the second heat exchange portion 31b turns into water vapor and is released into the room again.

Next, the controller starts timer measurement (ST10). Then, the controller determines whether or not the drying operation time tp has elapsed after the start of timer measurement (ST11). When the drying operation time tp does not elapse (ST11-No), the controller returns the processing to ST11 to continue the internal drying operation.

When the drying operation time tp has elapsed (ST11-Yes), the controller resets a timer (ST12). Then, the controller ends the processing by operation stop processing (ST13). Specifically, in the operation stop processing, the CPU 210 stops the compressor 21 and the outdoor fan 27. In addition, the outdoor expansion valve 24 is set to a fully-closed state. Moreover, the CPU 310 stops the indoor fan 33. In addition, the CPU 310 sets the indoor expansion valve 32 to a fully-closed state.

As described above, in the air conditioner 1 of the present embodiment, in a case where there is the user's instruction for the internal drying operation when the air conditioner 1 is stopped after the cooling operation or the dehumidifying operation, the refrigerant circuit 10 in the state of the reheat dehumidifying operation performs the internal drying operation. Thus, an increase in the humidity in the room where the indoor unit 3 is placed is suppressed while the inside of the indoor unit 3 is dried.

Note that in the above-described embodiment, the case where the decompression device is the expansion valve has been described. However, the present embodiment is not limited to such a case. For example, decompression measures having an opening degree which can be adjusted such that the second heat exchange portion 31b functions as the evaporator in the reheat dehumidifying operation, such as an electromagnetic valve of which opening degree changes between only two levels including an opening degree in a fully-open state and a predetermined opening degree, may be employed.

### LIST OF REFERENCE SIGNS

- 1: air conditioner
- 2: outdoor unit
- 3: indoor unit
- 10: refrigerant circuit
- 21: compressor
- 23: outdoor heat exchanger
- 24: outdoor expansion valve
- 27: outdoor fan
- 31: indoor heat exchanger
- 31a: first heat exchange portion
- 31a1: fin
- 31a2: heat transfer pipe
- 31b: second heat exchange portion
- 31bl: fin
- 31b2: heat transfer pipe
- 32: indoor expansion valve
- 33: indoor fan
- 200: outdoor unit controller
- 210: CPU
- 300: indoor unit controller
- 310: CPU
- Dop: cooling/dehumidifying opening degree
- Dip: internal drying opening degree
- Rca: cooling/dehumidifying compressor rotation number
- Red: internal drying compressor rotation number
- Rfoa: cooling/dehumidifying outdoor fan rotation number
- Rfod: internal drying outdoor fan rotation number Rfod
- Rfia: cooling/dehumidifying indoor fan rotation number
- Rfid: internal drying indoor fan rotation number Rfid
- tp: drying operation time

## Claims

1. An air conditioner comprising:
an outdoor unit (2); and
an indoor unit (3) including an indoor heat exchanger (31) and a decompression device,
wherein the indoor heat exchanger (31) has a first heat exchange portion (31a) and a second heat exchange portion (31b),
the decompression device is connected to the first heat exchange portion (31a) and the second heat exchange portion (31b),
wherein the air conditioner is configured to perform a cooling operation or a dehumidifying operation in which the first heat exchange portion (3 1a) and the second heat exchange portion (31b) function as evaporators and a reheat dehumidifying operation in which the first heat exchange portion (31a) functions as a condenser and the second heat exchange portion (31b) functions as the evaporator are performed, and
**characterized in that** the second heat exchange portion (31b) is treated to be water repelling and the first heat exchange portion (31a) is treated to be hydrophilic.

2. The air conditioner according to claim 1, wherein
the air conditioner is configured to perform the reheat dehumidifying operation in a case where operation of the air conditioner is stopped after the cooling operation or the dehumidifying operation, to dry an inside of the indoor unit (3).

## Patentansprüche

1. Klimaanlage, welche aufweist:
eine Außeneinheit (2) sowie
eine Inneneinheit (3), welche einen Innenwärmetauscher (31) und eine Dekompressionsvorrichtung aufweist,
wobei der Innenwärmetauscher (31) einen ersten Wärmeaustauschbereich (31a) und einen zweiten Wärmeaustauschbereich (31b) aufweist,
wobei die Dekompressionsvorrichtung mit dem ersten Wärmeaustauschbereich (31a) und dem zweiten Wärmeaustauschbereich (31b) verbunden ist,
wobei die Klimaanlage dazu vorgesehen ist, einen Kühlbetrieb oder einen Entfeuchtungsbetrieb durchzuführen, bei dem der erste Wärmeaustauschbereich (31a) und der zweite Wärmeaustauschbereich (31b) als Verdampfer fungieren, und einen Wiederaufheiz-Entfeuchtungsbetrieb durchzuführen, bei dem der erste Wärmeaustauschbereich (31a) als Kondenser fungiert und der zweite Wärmeaustauschbereich (31b) als Verdampfer fungiert, und
**dadurch gekennzeichnet, dass**
der zweite Wärmeaustauschbereich (31b) so behandelt ist, dass er wasserabweisend ist, und der erste Wärmeaustauschbereich (31a) so behandelt ist, dass er hydrophil ist.

2. Klimaanlage nach Anspruch 1, wobei
die Klimaanlage dazu vorgesehen ist, den Wiederaufheiz-Entfeuchtungsbetrieb in einem Fall durchzuführen, in dem der Betrieb der Klimaanlage nach dem Kühlbetrieb oder dem Entfeuchtungsbetrieb gestoppt wurde, um ein Inneres der Inneneinheit (3) zu trocknen.

## Revendications

1. Climatiseur, comprenant :
une unité à l'extérieur (2) ; et
une unité à l'intérieur (3) incluant un échangeur de chaleur à l'intérieur (31) et un dispositif de décompression,
où l'échangeur de chaleur à l'intérieur (31) comprend une première portion d'échange de chaleur (31a) et une deuxième portion d'échange de chaleur (31b),
le dispositif de décompression étant lié avec la première portion d'échange de chaleur (31a) et à la deuxième portion d'échange de chaleur (31b),
où le climatiseur est conçu pour réaliser un fonctionnement de refroidissement ou un fonctionnement de déshumidification, dans lequel la première portion d'échange de chaleur (31a) et la deuxième portion d'échange de chaleur (31b) fonctionnent comme évaporateurs, et un fonctionnement de réchauffage-déshumidification est réalisé dans lequel la première portion d'échange de chaleur (31a) fonctionne comme condenseur et la deuxième portion d'échange de chaleur (31b) fonctionne comme l'évaporateur, et
**caractérisé en ce que** la deuxième portion d'échange de chaleur (31b) est traitée pour être hydrofuge et la première portion d'échange de chaleur (31a) est traitée pour être hydrophile.

2. Climatiseur selon la revendication 1, où
le climatiseur est conçu pour exécuter le fonctionnement de réchauffage-déshumidification dans un cas où le fonctionnement du climatiseur est arrêté après le fonctionnement de refroidissement ou le fonctionnement de déshumidification, en vue de sécher un intérieur de l'unité à l'intérieur (3).
